# EUROPEAN PATENT APPLICATION

(11) **EP 2 400 331 A1**
(43) Date of publication of application: **28.12.2011**
(21) Application number: 11171106.5
(22) Date of filing: 22.06.2011
(51) Int. Cl.: G02B 6/50

(54) **Cable edging systems and methods**

(30) Priority: 24.06.2010 US 822640
(71) Applicant: Google Inc., Mountain View, CA 94043 (US)
(72) Inventor: Kelly, James Fintan, Milpitas, CA California 95035 (US)
(74) Representative: Elkiner, Kaya

(57) **Abstract**

Devices and methods are provided for deploying optical fiber-optic cables or other cables. A general planar device is formed with a conduit disposed along the device. One or more fiber-optic cables or other types of communication cables are inserted through the conduit. The device with the embedded cables is pressed into the ground and can be used to provide high-bandwidth communications to a user's home from a service provider.

## Description

### BACKGROUND OF THE INVENTION

### Field of the Invention

The invention relates generally to a fiber deployment method and device, including installing a fiber-optic cable in a narrow edging strip.

### Description of Related Art

Fiber-to-the-home or Fiber-to-the-premise (FTTH, FTTP, sometimes collectively known as FTTx) systems are broadband communication solutions that have quickly become a preferred technology for delivering bandwidth-intensive data such as pictures, video and Internet services. Such systems are currently in deployment throughout the U.S. and other parts of the world. There are a number of options for deploying fiber, such as running fiber-optic cable aerially from the existing utility poles, or burying cable straight into the ground or in existing or new ducts.

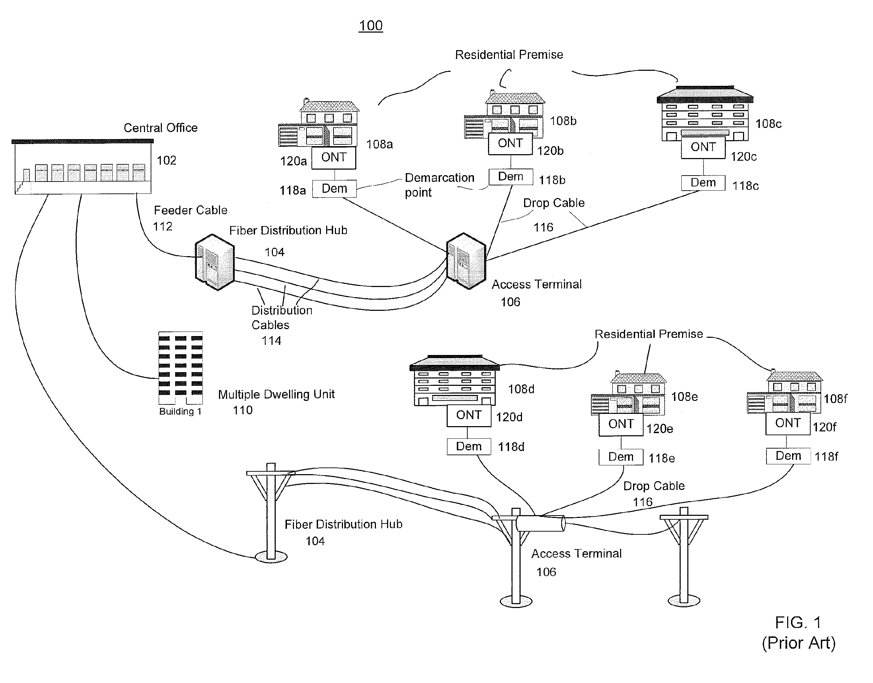

FIG. 1 illustrates various ways to install fiber optic cables in an FTTx system. The optical fiber running from the Central Office 102 to a Fiber Distribution Hub 104, where optical splitters may be located, is known as a feeder cable 112. The feeder cable 112 may also run to a Multiple Dwelling Unit (MDU) 110 from the Central Office. The feeder cable 112 may be buried underground or be placed into ducts. The Fiber Distribution Hub 104 splits the feeder cable into a group of distribution cables 114 that each ends at a fiber distribution terminal (or access terminal) 106. The distribution fiber cables may be buried underground, placed in ducts or run aerially between utility poles. The access terminals connect drop cables 116 to each Optical Network Terminal (ONT) 120a-f at the customer premises 108a-f. Like the distribution fibers, the drop cables may also be buried underground or into ducts or run aerially between the utility poles.

In the FTTP or FTTH networks, demarcation points 118-f are often present between an access terminal and the respective ONT at the customer's premises. It may be located on the property line drawn on the boundaries of the public street or walkway and the private property. The demarcation point separates the service provider's fiber plant and the user-owned fiber. Often, the drop fiber cable is from the public street through a garden or yard to the ONT located on the premises. Typically, the drop fiber is buried at least a few inches under the surface, which requires significant effort and time.

### SUMMARY OF THE INVENTION

Aspects of the invention provide a low-impact, convenient, time-efficient and cost-saving optical fiber deployment technology.

In one embodiment of the invention, a device for deploying a communication cable is provided. The device comprises a general planar substrate with a first side surface and a second side surface opposite the first side surface. The device also comprises a first edge and a second edge opposite the first edge, and first and second ends. The device further comprises a conduit disposed along the substrate to contain the communication cable therein, the conduit extending between the first end and the second end of the substrate.

In one example, the communication cable is a fiber-optic cable or a coaxial cable.

In another example, the distance between the first side surface and the second side surface is on the order of 1-5 millimeters.

In a further example, the distance between the first edge and the second edge is on the order of 50-70 millimeters.

In one alternative, the conduit is disposed along a central region of the substrate.

In another alternative, the device comprises a pair of mating members disposed on the first and second ends for coupling to another device.

In a further alternative, the conduit comprises a plurality of conduits.

In yet another alternative, the conduits are disposed side by side from the first edge to the second edge.

In one example, the first side surface and the second side surface taper toward each other from a central region of the device to the first and the second edges.

In another example, the device comprises a pair of connectors disposed on the first end and on the second end. The connectors are adapted to connect to respective ends of the communication cable.

In yet another example, the duct is disposed between the first and second side surfaces.

In accordance with another embodiment, a method of deploying a communication cable is provided. The method comprises forming a general planar device with a first side surface and a second side surface opposite the first side surface. The method also comprises forming a first edge and a second edge, a first end and a second end opposite the first end. The method also comprises forming a conduit disposed along the device to contain a communication cable, where the conduit extends between the first end and the second end. The method further comprises installing the communication cable into the conduit.

In one example, the communication cable is a fiber-optic cable or a coaxial cable.

In another example, the method also comprises inserting the device with the communication cable into the ground.

In a further example, the method also comprises forming a pair of mating members and disposing respective ones of the mating members on the first and second ends of the device.

In one alternative, the method comprises coupling the device with another device with the mating members.

In another alternative, the method comprises removing or disengaging a first length of the communication cable from a first section of the device.

In yet another alternative, the method comprises removing the first section from the device.

In a further alternative, installing the communication cable into the conduit comprises blowing the communication cable into the conduit by compressed gas.

### BRIEF DESCRIPTION OF THE DRAWINGS

FIG. 1 is a pictorial diagram of a fiber optic network.

FIGS. 2A-E are pictorial diagrams in accordance with aspects of the invention.

FIGS. 3A-B illustrate pictorial diagrams in accordance with aspects of the invention.

FIGS. 4A-B illustrate flowcharts in accordance with aspects of the invention.

FIGS. 5A-B are pictorial diagrams in accordance with aspects of the invention.

### DETAILED DESCRIPTION

Aspects, features and advantages of the invention will be appreciated when considered with reference to the following description of exemplary embodiments and accompanying figures. The same reference numbers in different drawings may identify the same or similar elements. Furthermore, the following description is not limiting; the scope of the invention is defined by the appended claims and equivalents.

In accordance with aspects of the invention, a fiber deployment device and method facilitates fiber installation, preferably from a demarcation point to a customer premise. Methods and devices consistent with the present invention enable the placement of fiber-optic cables through embedding fiber optic cable in a thin edging strip and pressing the edging strip into the ground.

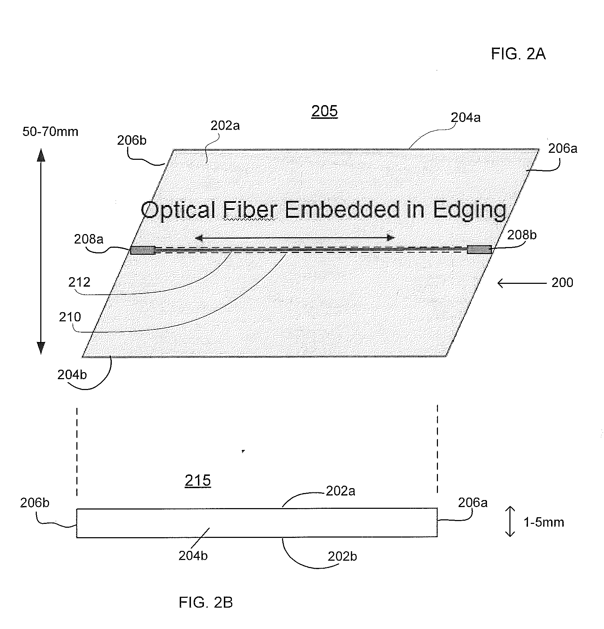

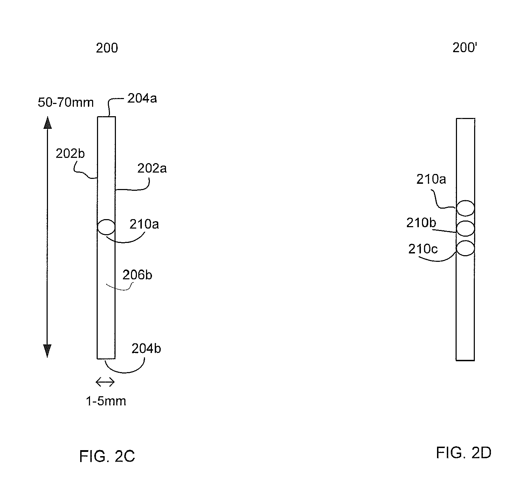

FIG. 2A illustrates a perspective view 205 of an exemplary device 200 to facilitate deploying fiber-optic cables in accordance with embodiments of the invention. The device 200 may include a substrate having a generally planar rectangular shape with a first side surface 202a and a second side surface 202b. The device also has a pair of opposing edges 204a and 204b. The width of the device between the edge 204a and 204b may be in a range of 50-70 millimeters. The device also has ends 206a and 206b. FIG. 2B illustrates an edge view 215 along the edge 204b, and FIG. 2C illustrates an end view from the end 206b. The thickness of the device between surfaces 202a and 202b may be in a range of a few millimeters, for example, 1-5 millimeters. The length of the device from end 206a to end 206b may be within a variety of ranges depending on a variety of factors. As discussed in detail below, the edging devices with the same shape but different lengths may be coupled together to achieve a total length desired by a customer. As shown in FIGS. 2A and 2C, a conduit 210 is disposed along the edging device 200. A communications cable such as fiber optic cable 212 may be installed within the conduit 210. The conduit 210 may be disposed along a central area of device 200 to afford protection to the fiber. Alternatively, the duct may also be formed within the edging device anywhere suitable. The duct may be tubular in shape, or may be another shape suitable to hold one or more fiber cables in it.

The dimensions of the device may depend on the dimensions and numbers of the conduits and cables provided. In one example, a number of optic cables may be placed in a single conduit. In this scenario, the conduit may be made to have a larger radius and the edging device may be made thicker than a single-fiber edging device. In another scenario as shown in FIG. 2D, multiple conduits 210a-c may be placed in an edging device 200'. The conduits 210a-c may be placed side by side within the edging device. In this situation, the distance between the two edges 204a and 204b may be made larger than a single-conduit device. While only 3 conduits are shown, any number of conduits may be used in an edging device.

In another embodiment, the dimensions of the edging device and the conduit may be made to accommodate the installation of coaxial cables or other kinds of communication cables, for example, radio frequency antenna cables or electrical cables that have different dimensions than fiber-optic cables. In further embodiments, the conduits 210a-c may be formed with different sizes for the purpose of, for example, embedding different numbers of and different types of cables inside.

Each individual device 200 may have a pair of connectors (or receptacles) 208a-b mounted on the respective ends of the conduit 210. The connectors may be used as attachment points to conduct and secure the fiber 212 through the conduit 210. The two connectors may be fixed to and be parts of the device 200, or may be made as separate components available to the customers to be installed on or removed from the device 200 as desired.

After a fiber-optic cable is disposed within the edging device, installation of the edging device may be achieved by pressing the device from a surface, such as the surface of a lawn, into the ground. The edging device may be pressed completely or partially into the ground. Alternatively, a narrowly cut slot may be selectively cut into the ground and the edging device may be pushed or placed into the slot. Various locations may be selected to install the fiber-optic cable from a demarcation point to the ONT. One of the locations to install the edging device may be along the boundary line of the driveway and the lawn. Existing cracked slots in the customer's property, for example, a slot along the driveway, may be utilized to deploy the edging device.

In one example, a single edging device may be made to have a bent shape and to possess a particular angle. In another example, edging devices may be coupled together to form a desired angle so the fiber-optic cable may be routed around a corner or an obstacle. Alternatively, a single piece of edging device may be made of materials that allow the customers to bend the device into an angled shape.

The edging device may have decorative color or pattern on the outside surface for aesthetic purposes. Alternatively, the edging device may be coated with selected colors to blend with the environment, e.g, a garden or a lawn. In other embodiments, coatings may be made attachable and removable from the edging device and different styles of coatings may be separately available to the customers.

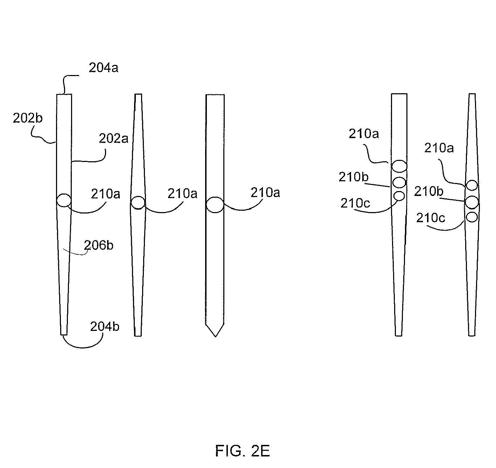

As shown in the end views of FIG. 2E, the edging device may be made to have a tapered cross sectional shape at both ends 204a-b or at only one of the ends, e.g., 204b. In this embodiment, the side surfaces 202a-b may be tapered. In one example, the two side surfaces may substantially join each other at one of the edges or both edges. Alternatively, the side surfaces may form a rectangular edge. These configurations may facilitate a convenient press of the device into the ground for the customers. Here, the conduits disposed in the edging device may be made with different dimensions to accommodate the tapering effect. In other embodiments, the edge surface may be made to have rounded corner for safety purpose or be made with any other suitable shapes.

The edging device may be made with various types of materials and through various types of manufacturing processes. In one example, the device may be made through a lamination process that presses two side surface layers together with a conduit in between. In another example, the device may be formed from a single strip with one or more grooves notched in to it to form space for fiber-optic cable or conduit. Then, a second strip is placed over the grooves to seal the edging. The device may be made of any appropriate material such as polymeric material or compounds that is suitable to contain fiber optic cable inside. The device may also be constructed in a way to provide robust protection for the enclosed fiber cables. By way of example, the device may be made of layers of different materials. For example, the inner surface of the conduit 210 may be made of materials or constructed to reduce the friction among the fiber cables routed within if more than one fiber cables is disposed in the device. In another example, the outer surface of the edging device may be made from the material and constructed in a way to withstand the environmental impacts, such as compression, tearing, heat, dampness and freezing damage, etc.

The edging device may be manufactured with materials to facilitate the device being flexibly rolled into a cylindrical shape for convenient packaging, shipping and/or storage. As to be discussed below, the edging device may also be made with materials to facilitate bending by the customers into different angles. Different sections of the device may be provided with different materials or varying proportions of materials. For example, the edge sections of the device may be infused with materials or coated with a layer that afford more rigidity and reinforcement to the edge for being pressed into ground. The mid section of the edging device may be made to have more flexibility so as to be rolled or bent.

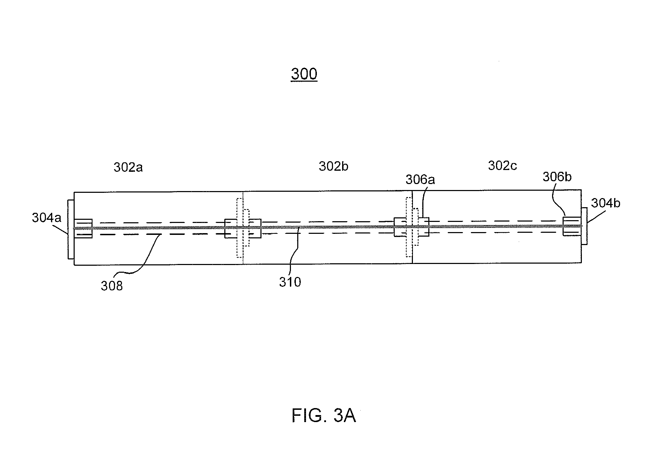

FIG. 3A illustrates a scenario 300 where three individual edging devices 302a-c are coupled together to achieve a desired length to install a fiber-optic cable 310. Various ways may be adopted to connect and secure two edging devices. In the example shown in FIG. 3A, each edging device 302a-c is provided with a pair of mating members 304a-b to connect with another edging device. Each mating member is disposed on one of the two ends of the edging device. When the edging devices are connected together, a single conduit 308 is formed to contain the fiber cable 310 inside. The fiber cable may be secured by the pairs of receptacles 306a-b in each device.

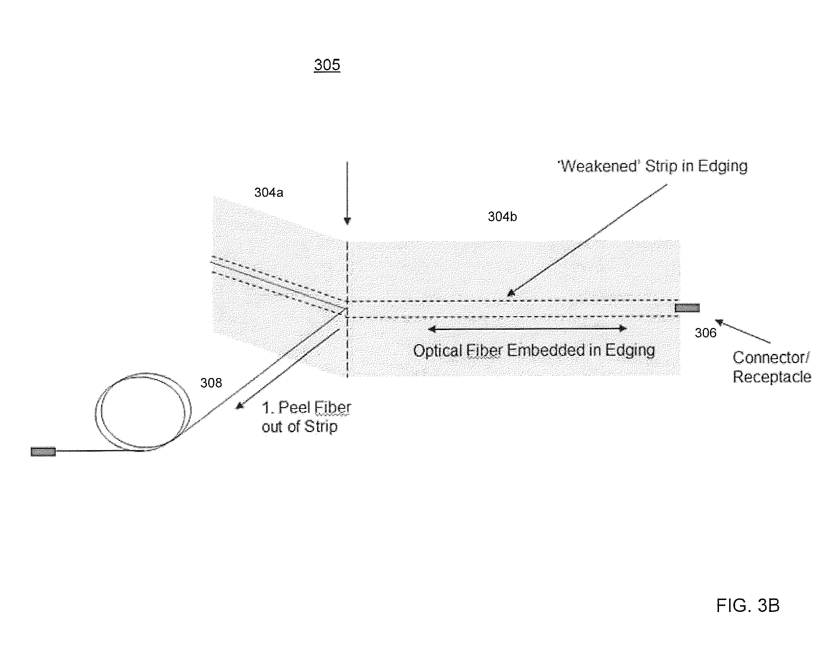

FIG. 3B shows that the edging device may be cut to an appropriate length. For example, a customer may have a fiber 302 with a length of 30 feet but only 27 feet of the fiber may need to be installed. Thus, any extra portion of fiber 302 and outer conduit may be peeled or otherwise disengaged from the edging device 304a. Upon disengagement, the extra portion may be rolled into a coil or otherwise stored. Then the extra portion of the edging device 304a may be removed, e.g., by cutting.

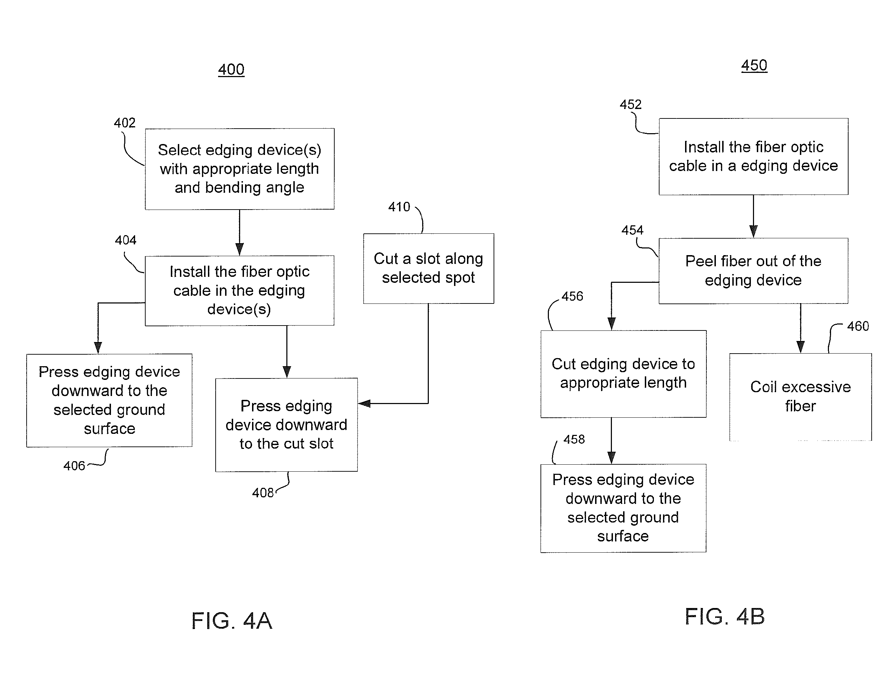

FIGS. 4A-B show the flowcharts of two scenarios of installing fiber optic cable using a device according to the aspects of the invention. In FIG. 4A, the process 400 may begin in step 402 where suitable edging devices with the appropriate lengths and bending angles are selected. In step 404, a fiber-optic cable is inserted into or otherwise formed in the edging device. The device with the embedded fiber-optic cable may be directly pressed into the ground in step 406. Alternatively, a slot may be cut into the ground in step 408 and then the device embedded with fiber-optic cable is pushed into the slot in step 410.

FIG. 4B shows another scenario 450 that begins with step 452, where a fiber cable is inserted into or otherwise formed in an edging device. In this scenario, the fiber cable may be longer than needed. Thus, in step 454, the fiber is peeled out of or otherwise removed from the edging device and the edging device is cut to the desired length in step 456. In step 458, the cut edging device with the fiber cable embedded in is pressed into the ground. The excessive fiber may be coiled up in step 460, as shown in FIG. 3.

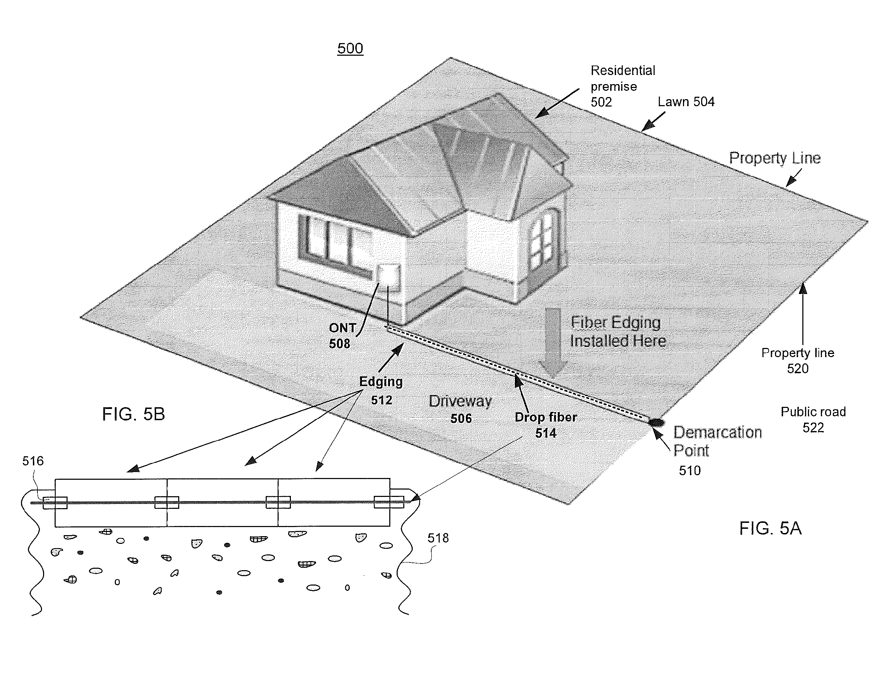

FIGS. 5A-B illustrates how fiber cable may be installed at customer location with the use of the device in accordance with aspects of the invention. FIG. 5A shows a customer premise 502, a lawn 504 and a driveway 506. The property line 520 delineates the boundary between a private property, e.g., the residential premise 502, and the public road 522. A demarcation point 510 that separates the service provider's fiber plant and the user-owned fiber may be placed on the property line 520. The demarcation point may be located at one end of the driveway 506 that leads to the public road 522 and at the boundary of the lawn 504.

As illustrated in FIG. 5A, drop fiber 514 functions as the fiber transmission path between the demarcation point and the ONT 508. The drop fiber 514 may be installed in an edging device 512 according to the embodiments of the invention along the boundary line of the driveway 506 and the lawn 504. FIG. 5B shows a side view of one embodiment of the edging device 502. Here the device is partially pressed under the ground 518, so portions of the device are exposed outside. As shown, the edging device 512 may be composed of a plurality of edging devices coupled together. Receptacles (or connectors) 516 may be used to provide interface sockets between two edging devices to fix the fiber cable inside the edging device.

In another embodiment, tubing suitable for installation of air blown fiber may be installed in an edging device without embedding fiber cables in the tubing. Alternatively, the duct inside the edging device may be configured into a shape and formed with materials suitable for air blowing fiber into it. Then the hollow edging device with the desired length and angles may be first installed at the customer premise before deploying the communication cables. Later, when the FTTx is available in the area, the fiber cables may be air blown or otherwise inserted into and guided through the tubing or the duct inside the edging device.

Although aspects of the invention herein have been described with reference to particular embodiments, it is to be understood that these embodiments are merely illustrative of the principles and applications of the present invention. It is therefore to be understood that numerous modifications may be made to the illustrative embodiments and that other arrangements may be devised without departing from the spirit and scope of the invention as defined by the appended claims.

As these and other variations and combinations of the features discussed above can be utilized without departing from the invention as defined by the claims, the foregoing description of exemplary embodiments should be taken by way of illustration rather than by way of limitation of the invention as defined by the claims. It will also be understood that the provision of examples of the invention (as well as clauses phrased as "such as," "e.g.", "including" and the like) should not be interpreted as limiting the invention to the specific examples; rather, the examples are intended to illustrate only some of many possible aspects.

Unless expressly stated to the contrary, every feature in a given embodiment, alternative or example may be used in any other embodiment, alternative or example herein. For instance, any technology or materials for constructing a suitable edging device may be employed in any configuration herein. Any shape, length, angles of the device may be provided in any configuration herein.

## Claims

1. A device for deploying a communication cable, comprising:
a general planar substrate with a first side surface and a second side surface opposite the first side surface, a first edge and a second edge opposite the first edge, and first and second ends; and
a conduit disposed along the substrate to contain the communication cable therein, the conduit extending between the first end and the second end of the substrate.

2. The device of claim 1, wherein the communication cable is a fiber-optic cable or a coaxial cable.

3. The device of any preceding claim, wherein the distance between the first side surface and the second side surface is on the order of 1-5 millimeters, and the distance between the first edge and the second edge is on the order of 50-70 millimeters.

4. The device of any preceding claim, wherein the conduit is disposed along a central region of the substrate.

5. The device of any preceding claim, further comprising a pair of mating members disposed on the first and second ends, for coupling to another device.

6. The device of any preceding claim, wherein the conduit comprises a plurality of conduits that are disposed side by side from the first edge to the second edge.

7. The device of any preceding claim, wherein the first side surface and the second side surface taper toward each other from a central region of the device to the first and the second edges.

8. The device of any preceding claim, further comprising a pair of connectors disposed on the first end and on the second end, the connectors adapted to connect to respective ends of the communication cable.

9. A method of deploying a communication cable, comprising:
forming a general planar device with a first side surface and a second side surface opposite the first side surface, a first edge and a second edge, a first end and a second end opposite the first end, and a conduit disposed along the device to contain a communication cable, the conduit extending between the first end and the second end; and
installing the communication cable into the conduit.

10. The method of claim 9, wherein the communication cable is a fiber-optic cable or a coaxial cable.

11. The method of claim 9 or claim 10, further comprising inserting the device with the communication cable into the ground.

12. The method of any of claims 9 to 11, further comprising forming a pair of mating members and disposing respective ones of the mating members on the first and second ends of the device.

13. The method of claim 12, further comprising coupling the device with another device with the mating members.

14. The method of any of claims 9 to 13, further comprising removing or disengaging a first length of the communication cable from a first section of the device.

15. The method of any of claims 9 to 14, wherein installing the communication cable into the conduit comprises blowing the communication cable into the conduit by compressed gas.
